# EUROPÄISCHE PATENTANMELDUNG

(11) **EP 0 633 380 A1**
(43) Veröffentlichungstag der Anmeldung: **11.01.1995**
(21) Anmeldenummer: 94109233.0
(22) Anmeldetag: 16.06.1994
(51) Int. Cl.: E05F 5/00, F16D 63/00, F16F 7/06

(54) **Bremselement zur Dämpfung einer Schubbewegung**

(30) Priorität: 10.07.1993 DE 4323095
(71) Anmelder: A. Raymond GmbH & Co. KG, D-79539 Lörrach (DE)
(72) Erfinder: Korb, Holger, D-79689 Maulburg (DE); Kirchgaesser, Johannes, D-79588 Efringen-Kirchen (DE)
(74) Vertreter: Kirchgaesser, Johannes, Dipl.-Ing.

(57) **Zusammenfassung**

Ein Bremselement zur Dämpfung einer durch eine Feder ausgelösten Schubbewegung besteht aus einem aus hartelastischem Kunststoff hergestellten Lagergehäuse (1) und einer in diesem drehbar gelagerten Bremsscheibe (2) aus ähnlichem Material, die über eine Welle (3) und ein daran angeformtes Antriebselement (4) mit einem Schubelement zusammenwirkt.

Um das Bremselement mit einfachen Mitteln möglichst kostengünstig herstellen zu können, ist die Bremsscheibe (2) mit zwei zur Mitte hin sich konisch verjüngende Reibflächen (5) versehen, die gegen entsprechend ausgebildete Reibflächen (6) im Lagergehäuse (1) mit konstant gehaltener Kraft angedrückt werden.

## Beschreibung

Die Erfindung bezieht sich auf ein Bremselement zur Dämpfung einer durch eine Feder ausgelösten Schubbewegung gemäß dem Oberbegriff des Anspruchs 1. Derartige Bremselemente werden im Kraftfahrzeugbau beispielsweise zur Dämpfung der Schwenkbewegung von Aschenbechern oder Klappen von Aufnahmefächern im Armaturenbrett verwendet werden.

Aus DE 84 04 656 U1 ist ein solches Bremselement zum Verzögern der Öffnungsbewegung von schwenkbeweglichen Teilen bekannt, welches einen an der schwenkbeweglichen Klappe angeordneten Zahnkranz und ein gehäuseseitig angeordnetes Zahnrad aufweist. Hierbei ist im Lagergehäuse ein als ebene Scheibe ausgebildetes Bremssegment angeordnet ist, welches unter Vorspannung durch eine im Gehäuse angeordnete Feder an die Drehbewegung ausführende Teile, nämlich Gehäuse und Welle mittelbar angelegt ist.

Bei diesem Bremselement wird es als Nachteil empfunden, daß dieses aus mehreren Einzelteilen Zusammengesetzt ist und die Herstellung daher mit hohen Kosten verbunden ist, weshalb auf die mit der Verwendung dieser Bremselemente verbundene Erhöhung des Bedienungskomforts insbesondere bei Klein- und Mittelklassewagen meistens verzichtet wird.

Aufgabe der Erfindung ist es, das vorgenannte Bremselement so zu gestalten, daß es durch Reduktion der Bauteile in der Herstellung wesentlich billiger wird und darüberhinaus auch leichter zu montieren ist.

Diese Aufgabe wird bei dem eingangs genannten Bremselement dadurch gelöst, daß die Bremsscheibe zwei zur Mitte hin sich konisch verjüngende Reibflächen aufweist, welche durch mindestens zwei Schlitze bis zum Scheibengrund unterbrochen sind, und daß die die Scheibe umgebende Wand des Gehäuses mit entsprechenden Gegenreibflächen versehen ist.

Das gesamte Bremselement besteht dadurch nur noch aus zwei Teilen, die sich zudem mit einem Handgriff zusammenfügen lassen. Die Andrückkraft richtet sich hierbei nach dem Reibungswiderstand der Reibflächen und dem Winkel der beiden Konusflächen. Diese sind so zu wählen, daß die Bremsscheibe mit dem gewünschten Reibungswiderstand versehen ist.

In den Unteransprüchen sind noch weitere Merkmale der Erfindung enthalten, durch welche die zur Erzeugung des Reibungswiderstandes zwischen Scheibe und Lagergehäuse erforderliche Vorspannung in der Bremsscheibe optimal einstellbar ist.

In der Zeichnung sind zwei Ausführungsbeispiele der Erfindung dargestellt, die nachfolgend näher erläutert werden sollen.

Es zeigt:
- Fig. 1: eine bevorzugte Ausführungsform der Bremsscheibe mit Antriebselement im Teilschnitt,
- Fig. 2: das dazugehörige Lagergehäuse im Schnitt,
- Fig. 3: das zusammengesteckte Bremselement im Schnitt,
- Fig. 4: eine andere Ausführungsform des Bremselementes im gleichen Schnitt,
- Fig. 5: ein Aschenbechergehäuse im Schnitt gemäß V - V in Figur 6 mit eingebautem Aschenbecher **und**
- Fig. 6: das Aschenbechergehäuse mit Aschenbehälter und eingebautem Bremselement im Schnitt gemäß VI - VI in Figur 5.

Das in den Figuren dargestellte Bremselement besteht aus einem Lagergehäuse 1 und einer in diesem drehbar gelagerten Bremsscheibe 2, die über eine Antriebswelle 3 mit einem Antriebselement 4 verbunden ist. Lagergehäuse 1 und Bremsscheibe 2 sind beide aus hartelastischem Kunststoff, wie beispielsweise Polyoxymethylen, hergestellt.

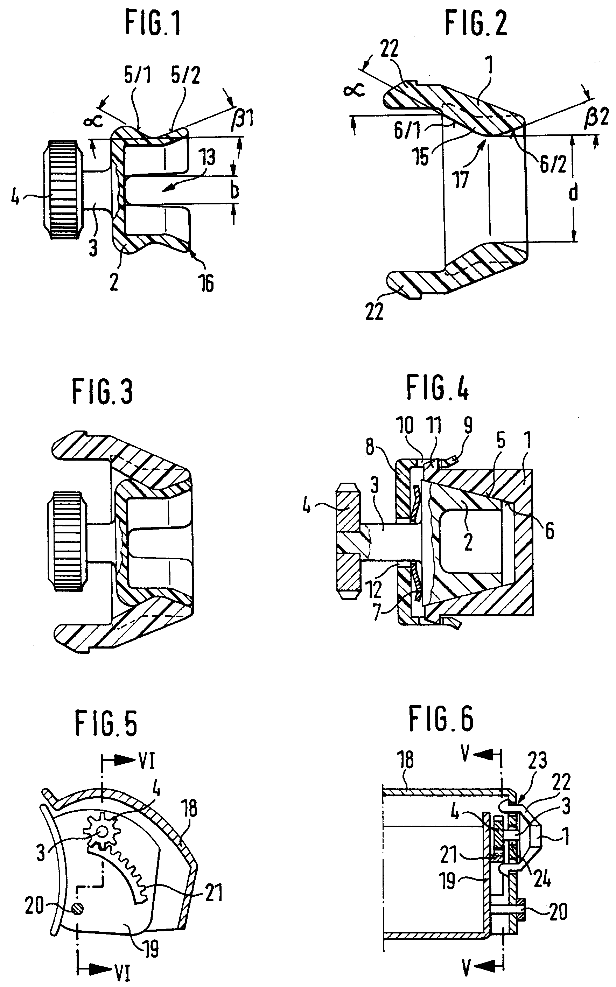

Bei dem in Figur 4 schematisch dargestellten Bremselement ist die Bremsscheibe 2 mit einer konisch ausgebildeten Reibfläche 5 versehen, die gegen eine entsprechend ausgebildete Reibfläche 6 im Lagergehäuse 1 angedrückt wird. Die Andrückkraft wird durch eine Tellerfeder 7 erzeugt, die sich an ihrer Rückseite an einem Bügel 8 abstützt und mit ihrem Tellerrand auf die Stirnseite der Bremsscheibe 2 eine konstante Kraft ausübt. Der Bügel 8 hat an zwei sich diametral gegenüberliegenden Enden abgewinkelte Rastlappen 9 mit Aussparungen 10, welche dazu bestimmt sind, in am Gehäuserand abstehende Rastnasen 11 im zusammengebauten Zustand des Bremselements einzurasten.

Der Bügel 8 besitzt ferner in der Achsmitte ein Loch 12, durch welches die Antriebswelle 3 der Bremsscheibe 2 hindurchgeführt wird, bevor das Antriebselement 4 - im vorliegenden Fall ein Ritzel - auf das Wellenende aufgedrückt wird.

In den Figuren 1 - 3 ist eine bevorzugte Ausführungsform des Bremselements gezeigt, wobei das Lagergehäuse 1 in Figur 2 und die Bremsscheibe 2 in Figur 1 dargestellt sind.

Die Bremsscheibe 2 weist im vorliegenden Fall zwei zur Mitte hin sich konisch verjüngende Reibflächen 5/1 und 5/2 auf, welche durch mindestens zwei Schlitze 13 bis zum Scheibengrund 14 unterbrochen sind. Dementsprechend ist die die Bremsscheibe 2 umgebende Wand 15 des Lagergehäuses 1 mit entsprechenden Gegenreibflächen 6/1 und 6/2 versehen.

Bei der Bremsscheibe 2 ist der Neigungswinkel α der sich zur Mitte hin verjüngenden Reibfläche 5/1 etwas größer als der Neigungswinkel β der sich von der Mitte ab nach hinten vergrößernden Reibfläche 5/2. Hierbei ist die Breite "b" der Schlitze 13 so bemessen, daß der Außenrand 16 der hinteren Reibfläche 5/2 auf den Durchmesser "d" des Engpasses 17 in der doppelkonischen Gehäusewand 15 federnd zusammendrückbar ist.

Im Hinblick auf die nach dem Zusammenbau nicht wieder in ihre Ursprungslage zurückfedernden Reibflächen 5/2 ist deren Neigungswinkel β1 im Herstellungszustand zweckmäßigerweise um ein weniges, d.h. um 2° bis 4° größer ausgebildet als der entsprechende Neigungswinkel β2 der Gehäusewand, so daß die beiden Neigungswinkel β1 und β2 im zusammengebauten Zustand des Bremselements (s. Figur 3) dann gleich sind.

In den Figuren 5 und 6 ist der Bestimmungszweck des Bremselements anhand eines im Armaturenbereich eingebauten Aschenbechers anschaulich dargestellt. Hierbei zeigt Figur 5 einen im Aschenbechergehäuse 18 über einen Zapfen 20 schwenkbar gelagerten Aschenbehälter 19 mit einem an der Außenwand angeformten Zahnradsegment 21, in welches das Ritzel 4 der Bremsscheibe 2 kämmend eingreift.

Das Zusammenwirken von Aschenbecher und Bremselement ist aus Figur 6 ersichtlich, welche die Einbausituation im Aschenbechergehäuse zeigt.

Zur Verankerung des Bremselements im Aschenbechergehäuse 18 weist das Lagergehäuse 1 zwei diametral gegenüberliegende, über den Gehäuserand vorstehende Rasthaken 22 auf, welche in entsprechende Aussparungen 23 im Aschenbechergehäuse 18 eingedrückt werden. Die Antriebswelle 3 ragt hierbei mit dem Ritzel 4 durch eine weitere Aussparung 24 im Gehäuse 18 ebenfalls in den Gehäuseinnenraum hinein. Der Aschenbehälter 19 ist mit Zapfen 20 im unteren Bereich des Gehäuses 18 schwenkbar gelagert.

Nicht dargestellt ist der bei solchen Aschenbechern übliche, durch Fingerdruck gegen den Aschenbehälter 19 überwindbare Verriegelungsmechanismus sowie die das Öffnen des Aschenbehälters 19 bewirkende Feder, welche die Schubbewegung auslöst. Diese sorgt beim Aufschwenken des Aschenbehälters 19 dafür, daß das Zahnradsegment 21 über das Ritzel 4 die Bremsscheibe 2 im Lagergehäuse 1 dreht, wobei durch die Reibflächen 5/1, 5/2 und 6/1, 6/2 die nötige Bremswirkung erreicht wird. Auf diese Weise kann der Aschenbehälter 19 nach dem Antippen, d.h. dem Ausrasten der Verriegelung, von der Feder getrieben und der Bremsscheibe gebremst, langsam nach vorne schwenken.

## Patentansprüche

1. Bremselement zur Dämpfung einer durch eine Feder ausgelösten Schubbewegung, bestehend aus einem aus hartelastischem Kunststoff hergestellten Lagergehäuse (1) und einer in diesem drehbar gelagerten Bremsscheibe (2) aus ähnlichem Material, die über eine Welle (3) und ein daran angeformtes Antriebselement (4) mit einem Schubelement zusammenwirkt, wobei die Bremsscheibe (2) mit einer Reibfläche (5) versehen ist, die gegen eine entsprechend ausgebildete Reibfläche (6) im Lagergehäuse (1) mit konstant gehaltener Kraft angedrückt wird, **dadurch gekennzeichnet**, daß die Bremsscheibe (2) zwei zur Mitte hin sich konisch verjüngende Reibflächen (5/1 und 5/2) aufweist, welche durch mindestens zwei Schlitze (13) bis zum Scheibengrund (14) unterbrochen sind, und daß die die Scheibe (2) umgebende Wand (15) des Gehäuses (1) mit entsprechenden Gegenreibflächen (6/1 und 6/2) versehen ist.

2. Bremselement nach Anspruch 1, dadurch gekennzeichnet, daß der Neigungswinkel (α) der sich zur Mitte hin verjüngenden Reibflächen (5/1 und 6/1) von Bremsscheibe (2) und Gehäusewand (1) etwas größer ist als der Neigungswinkel (β) der sich von der Mitte nach hinten vergrößernden Reibflächen (5/2 und 6/2), wobei die Breite "b" der Schlitze so bemessen ist, daß der Außenrand (16) der hinteren Reibfläche (5/2) auf den Durchmesser "d" des Engpasses (17) in der doppelkonischen Gehäusewand (1) federnd zusammendrückbar ist.

3. Bremselement nach Anspruch 2, dadurch gekennzeichnet, daß der hintere Neigungswinkel (β1) der Bremsscheibe (2) um wenige Grad größer ist als der entsprechende Neigungswinkel (β2) der Gehäusewand (1).
